# EUROPEAN PATENT APPLICATION

(11) **EP 3 249 275 A1**
(43) Date of publication of application: **29.11.2017**
(21) Application number: 17167760.2
(22) Date of filing: 24.04.2017
(51) Int. Cl.: F16L 21/00, F16L 25/14, F16L 47/06

(54) **COUPLING COMPRISING A BODY FORMED OF FKM**

(30) Priority: 27.05.2016 GB 201609397
(71) Applicant: VIP-Polymers Limited, Huntingdon, Cambridgeshire PE29 7EB (GB)
(72) Inventor: DUNLEAVY, John, Cambridgeshire, PE29 1 PH (GB)
(74) Representative: Windsor, Louise

(57) **Abstract**

A coupling (1, 7) comprising a body formed of FKM and means (2, 3, 4, 8, 9, 10, 11, 20, 21) for sealing the coupling (1, 7), in use to a pipe.

## Description

The present invention relates to a coupling for use in a new pipe system and/or joining two pipes or a single pipe which has been broken or damaged in a drainage system, in particular in a drainage system that requires a high chemical resistance to a wide range of chemicals and intermittent temperature variations.

The products known as 'chemical couplings' within the drainage industry provide a flexible and watertight connection in above and below ground drainage systems that require a high chemical resistance to a wide range of chemicals and intermittent temperature variations of typically -20°C to 130°C. The installation of chemical couplings requires consideration of the risk of potential faults and associated leaks. For example, chemical couplings may be used in the chemical and process industries; pharmaceutical, medical and research laboratories; food processing plants; breweries; dairies; in contaminated ground and in areas susceptible to chemical spillage. Companies have legal obligations to ensure that the danger of any pollution is minimised and any joints or repairs to chemical carrying pipes must be resistant to chemicals being carried through the pipes and to any changes in temperature.

At present, to join pipework carrying chemicals a multi-stage process is used. This process takes place *in situ*; for example, in a trench, where space can be limited and ground conditions can make it difficult to keep everything clean and dry, which is vital for the multi-stage process. First, the pipes are cleaned to ensure that they are free from dirt and then chamfered before an FEP liner is slid over one side of the opening and the coupling is slid over the other. The pipes are butted together leaving a necessary gap and marks are made on the pipe equidistant from the abutting edges to make sure that the coupling will sit symmetrically. Marks are also made for the PTFE seals.

Secondly, PTFE seals, which are strips of PTFE, are applied to the pipe surface and the FEP liner is slid over the PTFE seals. Heat is applied to shrink the FEP liner. The heat is applied via a hot air gun as health and safety requirements do not allow the use of a naked flame. It is a time consuming and laborious task to shrink the FEP liner with a hot air gun. Finally, once the FEP liner has been shrunk then the coupling is placed centrally over the liner and the clamps are tightened.

It has been found that the complex fitting process and the requirement for a dirt-free environment increases the risk that the coupling can be incorrectly fitted. Installation errors, including entirely omitting the liner sleeve are of particular concern when coupling pipes that will contain chemicals.

According to the present invention, there is provided a coupling comprising a body formed of FKM and means for sealing the coupling, in use, to one or more pipes.

The use of FKM, which is an elastomeric material, to form the body of the coupling allows the chemical coupling to be manufactured as a single complete unit and therefore, there is no need for separate sleeves, which require shrinking or seal strips of material in the above-described multi-stage process. The coupling of the present invention significantly reduces the risk of installation errors to improve safety and performance of the coupling for chemical applications. This of great importance in applications where the fluid being transported through the coupled pipes is often dangerous and/or at high temperatures.

Preferably, the coupling of the present invention is suitable for chemical and high temperature applications.

It has been found that the coupling of the present invention is suitable for use with over 770 chemicals and solvents.

Accordingly, a method of installing the coupling of the present invention merely requires three steps; first, the pipes are butted together leaving a [necessary] gap. Secondly, marks are made on the pipe equidistant from the abutting edges to make sure that the coupling will sit symmetrically. Thirdly, the coupling is place centrally over the pipe and means for sealing the coupling are engaged. This is a significant time saving over the known methods. Further, there is less opportunity for the coupling to be contaminated with dirt.

Preferably, the means for sealing the coupling comprises at least two tension bands and/or one shear band.

Preferably, the or each shear band is made of stainless steel.

Preferably, the or each tension bands are made of stainless steel.

The shear and/or tension bands of the present invention ensure that the coupling will not leak. The means for sealing can be engaged in any suitable way. The use of primary seals (the bands) and two secondary seals ensures that there are three points of sealing contacts under the tension band which ensures that the sealing function is maintained under relatively low loads, typically of about 6 N/m. In addition the central shear band, as well as providing shear resistance, provides a fourth sealing area on the coupling. The bands can be secured, for example, by using a torque wrench with a torque gauge to ensure that they are not over or under tightened.

It has been found that the simplified and stream-lined configuration of the coupling of the present invention is well-suited to chemical coupling in low pressure and gravity (non-pressurised) applications. It is understood that a low pressure application is an application in the pressure range of about 2 bars to about 3 bars.

Preferably, the coupling is suitable for use at between about 0.1 bars and about 2.5 bars. Optionally, the coupling is suitable for use under a vacuum pressure of about -0.25 bars.

Preferably, the coupling can withstand temperatures in the range of about -20°C to about 130°C.

Remarkably, it has been found that the coupling of the present invention has a much greater thermal range when compared with known EPDM and Nitrile products.

Preferably, the FKM is formulated to have stress relaxation values as defined in EN681-1 and EN682; for example, a stress relaxation value of 22% after 100days at 23°C.

Preferably, the FKM is formulated to have compression values as defined in EN681-1 and EN682; for example, a compression value of a maximum of 20% over 24 hours at 70°C.

The FKM of the present invention is formulated to meet the physical test requirements of both European Standards EN681-1 and EN682, whilst also meeting the enhanced environmental resistance demands of the chemical industry. The formulation is enhanced to provide superior chemical and heat resistance, whilst maintaining the aforementioned physical properties of EN681-1 and EN682. The formulation and processing parameters have also been optimised to provide long term, proven product life performance, particularly with respect to enhanced stress relaxation and compression set values over longer term test durations than would be normally seen in EN681-1 and EN682 test standards.

Preferably, the FKM is coloured.

The FKM formulation of the present invention can be coloured to provide a visual indicator, such as a colour code; for example, to indicate that the pipes are carrying a certain chemical. Thus, the present invention allows the coupling to be distinguished from other, standard, non-chemical couplings that are not suitable for chemical applications.

Optionally, the coupling is formed to join two pipes, where the potential shear load is significantly reduced; for example where the pipes to be joined are above ground. In this application, the coupling of the present invention comprises only two tension bands as a means of sealing the coupling to the pipe/s.

Optionally, the coupling is formed to join two pipes with different diameters.

The present invention allows pipes with different flow rates or purposes to be joined. The solution of the present invention allows for bespoke couplings to be made according to the requirements of the installation; such that pipes of any material, size, or combination can be joined.

Within this specification, embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

An embodiment of the present invention will now be described by way of example and with reference to the accompanying drawings, of which:-
Figure 1 shows a front view of a coupling of the present invention;
Figure 2a shows a front view of a first alternative embodiment in accordance with the present invention;
Figure 2b shows a front view of a second alternative embodiment in accordance with the present invention;
Figure 3 shows an enlarged view of the sealing of the coupling of the present invention.

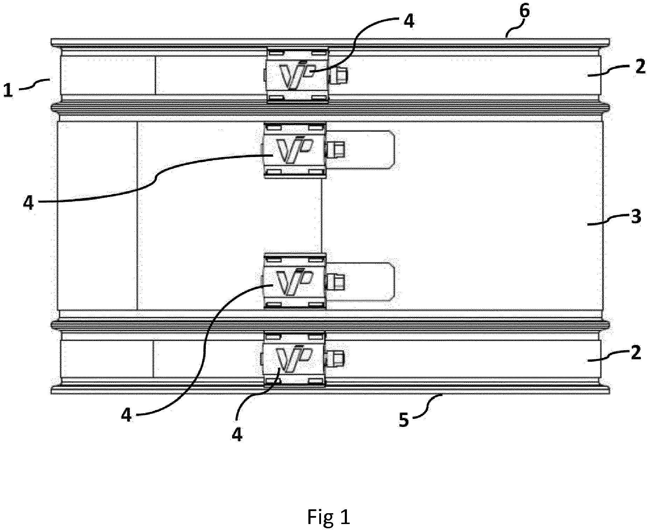

Turning to the Figures, in Figure 1 there is provided a coupling 1 formulated from FKM. The FKM can be any colour and the colour can be used to indicate that a particular chemical or effluent is passing through the pipe. The coupling 1 has two tension bands or clamps 2 and a central shear band 3. The clamps 2 have an adjuster 4 each and the shear band 3 of the embodiment of Figure 1, due to its width, has two adjusters 4. The amount of compression exerted on the coupling by the shear bands 3 and the tension band/clamps 2 is adjusted by tightening or loosening the adjusters 4. For a coupling used to join pipes having a diameter greater than about 620mm, an M8 bolt system is used.

The shear band 3 and the tension band/clamps 2 are formed from stainless steel or another suitable material, such as titanium.

In use to couple two pipe ends, the coupling 1 is measured and then a mark is placed on a first pipe end (not shown) at half the length of the coupling.

A mark is then also placed on a second pipe (not shown). The first and second pipe ends of the embodiment of Figure 1 both have the same diameter. The first pipe is then slotted through aperture 5 until it reaches the mark, before the second pipe end is slotted through aperture 6 until it reaches its respective mark and abuts the first pipe. The shear band 3 and the tension bands 2 are then tightened in increments using a torque wrench (not shown) to tighten the adjusters 4. A torque wrench with a torque gauge is ideally used in order to ensure that the bands 2, 3 are tightened sufficiently to create a seal on any pipe. A rotational tightening mechanism is preferably used to ensure that a sufficient seal is provided. It has been found that the efficient sealing and stream-lined fitting process for the coupling of the present invention, allows the coupling to be installed accurately in less than two minutes.

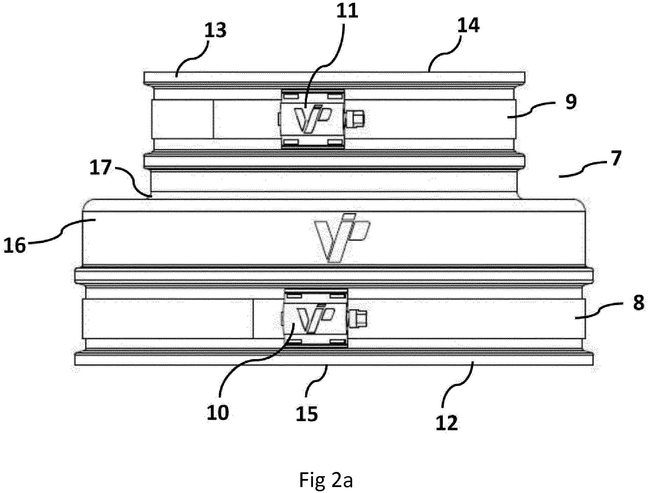

In Figure 2a, there is shown a coupling 7 which is a second embodiment of the coupling of the present invention, which is formulated from FKM. Coupling 7 has two tension bands/clamps 8 and 9 with adjusters 10 and 11. The two ends of the coupling 7 are two different diameters; end 12 is of a significantly larger diameter than end 13. Accordingly, the coupling 7 can be used to join pipes of different diameters and the present invention offers a solution that can be adapted to different installations. Optionally, the central axis of each end of the coupling 7 is not parallel (i.e. each pipe end is off centre to each other). In the embodiment of Figure 2a, the ends of a first pipe (not shown) are to be joined to a second pipe (not shown). In this embodiment, the ends of the first and second pipe when joined are not abutting each other and there is no requirement for the provision of a central shear band.

Referring to Figure 2a, the coupling 7 will be used in a similar way as to coupling 1 shown in Figure 1. In use, a first pipe (not shown) with an external diameter corresponding to the internal diameter of first coupling end 12 is inserted into the coupling 7 through aperture 15. No marking is required as a user will know that the first pipe is correctly inserted when it abuts against an internal wall, positioned 16 within the first coupling end 12. A second pipe with an external diameter corresponding to the internal diameter of second coupling end 13 is inserted into end 13 through aperture 14. The second coupling end 13 contains a ridge 17, which in this case is a protrusion having a height corresponding to about the thickness of the wall of the second pipe. The ridge 17 allows a user to gain a tactile indication when the end of the pipe abuts the ridge. Accordingly, the user will know that the second pipe is correctly inserted into the coupling 7 when it abuts against ridge 17. The tension bands/clamps 8, 9 are then tightened in increments in a rotational order using a torque wrench (not shown) to tighten the adjusters 10 and 11. A torque wrench with a torque gauge is ideally used in order to ensure that the bands are tightened sufficiently to create a seal on any pipe. A rotational order is preferably used to ensure that a sufficient seal is provided at all points.

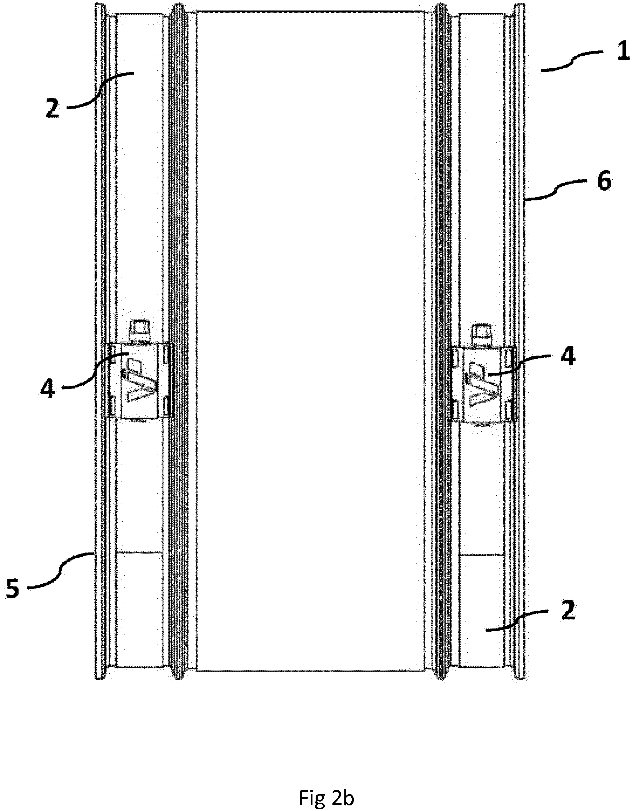

Referring to Figure 2b, a second alternative embodiment of the coupling 1 of the present invention is shown, for use commonly in drainage applications. Like numerals are used to refer to like parts, wherein the coupling 1 comprises two tension band/clamps 2. However, the embodiment of Figure 2b does not comprise a shear band. The coupling is formulated from FKM and can be any colour. The tension band/clamps 2 are made of stainless steel.

Referring to Figure 2b, in use to couple two pipe ends, the coupling 1 is measured and then a mark is placed on a first pipe end (not shown) at half the length of the coupling 1. A mark is then also placed on a second pipe (not shown). The first and second pipe ends of the embodiment of Figure 2b both have the same diameter. The first pipe is then slotted through aperture 5 until it reaches the mark, before the second pipe end is slotted through aperture 6 until it reaches its respective mark and abuts the first pipe. The tension bands 2 are then tightened in increments using a torque wrench (not shown) to tighten the adjusters 4. A torque wrench with a torque gauge is ideally used in order to ensure that the bands 2 are tightened sufficiently to create a seal on any pipe. A rotational tightening mechanism is preferably used to ensure that a sufficient seal is provided.

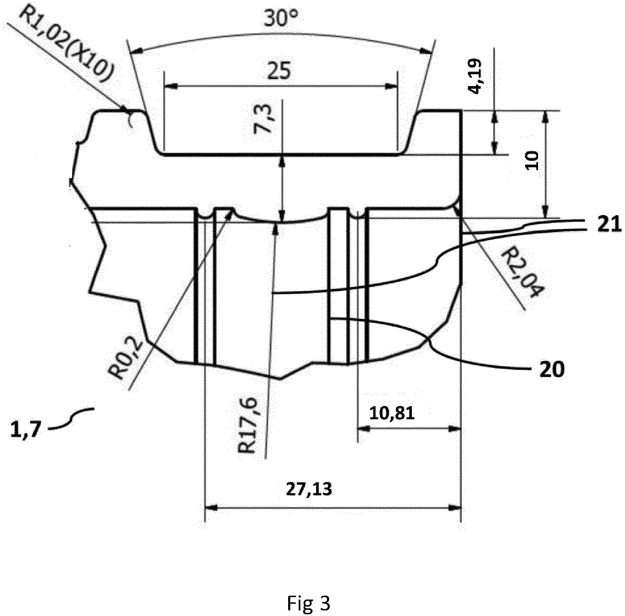

Referring to Figure 3, the sealing features of the coupling of the present invention are shown. Figure 3 is an enlarged view of a section of the coupling 1, 7. The coupling 1, 7 of the present invention comprises one primary seal 20 and two secondary seals 21, with the primary seal 20 positioned between the two secondary seals 21. Thus the coupling 1, 7 of the present invention provides three sealing contacts 20, 21 between the inner wall of the coupling 1, 7 and the pipe/s (not shown) around which the coupling 1, 7 is fixed. The multiple sealing contacts 20, 21 provide improved security to ensure that a seal between the coupling 1, 7 and the pipe/s is achieved and maintained during use. The effective seal is achieved even under relatively low loads.

Within this specification, the term "about" means plus or minus 20%, more preferably plus or minus 10%, even more preferably plus or minus 5%, most preferably plus or minus 2%.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A coupling (1, 7) comprising a body formed of FKM and means (2, 3, 4, 8, 9, 10, 11, 20, 21) for sealing the coupling, in use to a pipe.

2. A coupling (1, 7) according to claim 1 wherein the means for sealing the coupling is at least one shear band (3) and/or at least two tension bands (8, 9).

3. A coupling (1, 7) according to any preceding claim wherein the coupling is suitable for use at between 0.1 and 2.5 bars.

4. A coupling (1, 7) according to any preceding claim wherein the coupling can withstand temperatures in the range of -20°C to 130°C.

5. A coupling (1, 7) according to any preceding claim wherein the FKM is formulated to have maximum stress relaxation values, in accordance with EN681-1 and EN682, of 22% after 100 days at 23°C.

6. A coupling (1, 7) according to any preceding claim wherein the FKM is formulated to have maximum compression values, in accordance with EN681-1 and EN682, of 20% over 24 hours at 70°C.

7. A coupling (1, 7) according to any preceding claim wherein the FKM is coloured.

8. A coupling (7) according to any preceding claim wherein the coupling is for joining two pipes, wherein each pipe has a different diameter.
